# EUROPEAN PATENT APPLICATION

(11) **EP 4 559 684 A1**
(43) Date of publication of application: **28.05.2025**
(21) Application number: 24214872.4
(22) Date of filing: 22.11.2024
(51) Int. Cl.: B41J 2/155, B41J 2/21

(54) **PRINTING METHOD AND PRINTING APPARATUS**

(30) Priority: 24.11.2023 JP 2023199390
(71) Applicant: Brother Kogyo Kabushiki Kaisha, Nagoya, Aichi 467-8561 (JP)
(72) Inventor: FUJIWARA, Susumu, Nagoya, 467-8562 (JP); MAEDA, Ayaka, Nagoya, 467-8562 (JP)
(74) Representative: J A Kemp LLP

(57) **Abstract**

A technique for suppressing the occurrence of a color streak and the occurrence of the color streak and the occurrence of the partially uneven density in a case where printing is performed using the printing apparatus. When forming a group of dot lines in a high duty mode, an edge correction processing is performed to reduce an amount of ink droplets ejected from at least one of the right-end nozzles (42Rs) and the left-end nozzles (42Ls).

## Description

### TECHNICAL FIELD

The present invention relates to a printing method and a printing apparatus.

### BACKGROUND ART

A known printing apparatus includes an ink-jet head having head units, and a conveyor which conveys a recording medium in a conveying direction. The head units are disposed in a staggered manner. Specifically, the plurality of head units construct two head unit rows disposed side by side in the conveying direction, and each of the head unit rows extends in a longitudinal direction orthogonal to the conveying direction. In two head units, included in the plurality of head units and adjacent in the longitudinal direction, an end nozzle of usable nozzles of one head unit and an end nozzle of usable nozzles of the other head unit are adjacent in the longitudinal direction.

### CITATION LIST

### [Patent Literature]

Patent Literature 1: Japanese Patent Application Laid-Open No. JP 2008-074065 A

### SUMMARY

### PROBLEM TO BE SOLVED BY THE INVENTION:

In a case where liquid droplets of the same size are ejected simultaneously from the end nozzle of the usable nozzles of the one head unit and the end nozzle of the usable nozzles of the other head unit of the two head units adjacent in the longitudinal direction of the ink-jet head of the known printing apparatus, a color streak may occur in some cases. In the known printing apparatus, in a case where such a color streak occurs, the size of the liquid droplet ejected from at least one of the end nozzle of the usable nozzles of the one head unit or the end nozzle of the usable nozzles of the other head unit is always made small, thereby preventing the occurrence of the color streak.

In the above-described known printing apparatus, since the size of the liquid droplet ejected from at least one of the end nozzle of the usable nozzles of the one head unit or the end nozzle of the usable nozzles of the other head unit is always made small, the density of the liquid droplet of the ink is smaller than the density of the droplet of the ink in a print area to which the droplet of the ink is ejected from each of other nozzles other than the end nozzles, which may, in turn, lead to an occurrence of partially uneven density.

An object of the present invention is to provide a technique for controlling the occurrence of the color streak and the occurrence of the partially uneven density in a case where printing is performed using the printing apparatus.

### SOLUTION TO THE PROBLEM:

A printing method according to an aspect of the present invention is a printing method using a printing apparatus. The printing apparatus includes: a head bar having a first head and a second head disposed side by side in a first direction and at positions, respectively, which are shifted from each other in a second direction orthogonal to the first direction; and a conveyor configured to convey a recording medium from an upstream side toward a downstream side along the second direction. The first head is located upstream of the second head in the second direction. Each of the first head and the second head has a nozzle area in which nozzles are aligned at a pitch P along the first direction, and a first end part of the nozzle area of the first head in the first direction and a second end part of the nozzle area of the second head in the first direction overlap with each other in the first direction. Usable nozzles of the first head includes first-end nozzles located in the first end part in the first direction, and usable nozzles of the second head includes second-end nozzles located in the second end part in the first direction, the distance in the first direction between a first nozzle, which is located at a first end of the first-end nozzles in the first direction, and a second nozzle, which is located at a second end of second-end nozzles in the first direction is less than the pitch P. In a case of forming a group of dot lines formed along the second direction by liquid droplets ejected from the first-end nozzles, the printing apparatus is configured to execute a low duty mode in which a group of dot lines of a first density is formed and a high duty mode in which a group of dot lines of a second density that is higher than the first density is formed. The printing method includes: performing printing by repeatedly ejecting liquid droplets from the usable nozzles of the first head and the usable nozzles of the second head while conveying the recording medium along the second direction; and in a case of forming the group of dot lines in the high duty mode using the liquid droplets ejected from the first-end nozzles, reducing an amount of liquid droplets ejected from at least one of the first-end nozzles or the second-end nozzles.

### EFFECT OF THE INVENTION:

In the configuration described above, when forming a group of dot lines in the high duty mode, the amount of liquid droplets ejected from at least one of the first-end nozzles and the second-end nozzles is reduced. As a result, the occurrence of color streaks is controlled.

### BRIEF DESCRIPTION OF DRAWINGS

FIG. 1 is a plan view illustrating the outline of a printing apparatus 1.
FIG. 2 is a schematic diagram illustrating the outline of the printing apparatus 1.
FIG. 3 is a schematic diagram for illustrating the manner in which heads 11 included in a head group 20 are disposed.
FIG. 4 is a schematic diagram for illustrating the inside of a channel unit 40.
FIG. 5 is a schematic diagram for illustrating a state that a head 11A and a head 11B are ideally positioned.
FIG. 6 is a schematic diagram for illustrating a case where overlap of print areas is 0.5 px, and where an amount of 100 % of the ink is ejected from each of a right-end nozzle 42R and a left-end nozzle 42L.
FIG. 7 is a schematic diagram for illustrating a case where the overlap of the print areas is 0.5 px, and where an amount of 75% of the ink is ejected from each of the right-end nozzle 42R and the left-end nozzle 42L.
FIG. 8A is a schematic diagram for illustrating print data in a case where the overlap of the print areas is 0 µm (0 px), FIG. 8B is a schematic diagram for illustrating print data in a case where the overlap of the print areas is 6 µm (approximately 0.28 px), FIG. 8C is a schematic diagram for illustrating print data in a case where the overlap of the print areas is 11 µm (approximately 0.52 px), and FIG. 8D is a schematic diagram for illustrating print data in a case where the overlap of the print areas is 18 µm (approximately 0.85 px).
FIG. 9 is a flowchart for describing a printing process.
FIG. 10 is a sequence diagram of printing.
FIG. 11 is a flowchart for describing correction of the print data according to a thinning-out ratio.
FIG. 12A is a diagram for illustrating a state that the density of the ink is low and that voids in each of which an ink droplet has not landed can be observed, FIG. 12B is a diagram for illustrating a state that voids in each of which an ink droplet has not landed are fewer than the voids in FIG. 12A, and FIG. 12C is a diagram for illustrating a state that ink droplets land, respectively, on top of ink droplets which have already landed.
FIG. 13A is a diagram for illustrating a case where the printing is performed in a high-duty mode, and FIG. 13B is a diagram for illustrating that the ink density becomes high in an overlap part between a print area of the head 11A and a print area of the head 11B in a case where the printing is performed in the high-duty mode.
FIG. 14 is a diagram for illustrating a plurality of right-end nozzles 42Rs and a plurality of left-end side nozzles 42Ls.
FIG. 15 is a diagram for illustrating an example of an edge process.
FIG. 16 is a diagram for illustrating another example of the edge process.

### DESCRIPTION OF THE EMBODIMENT

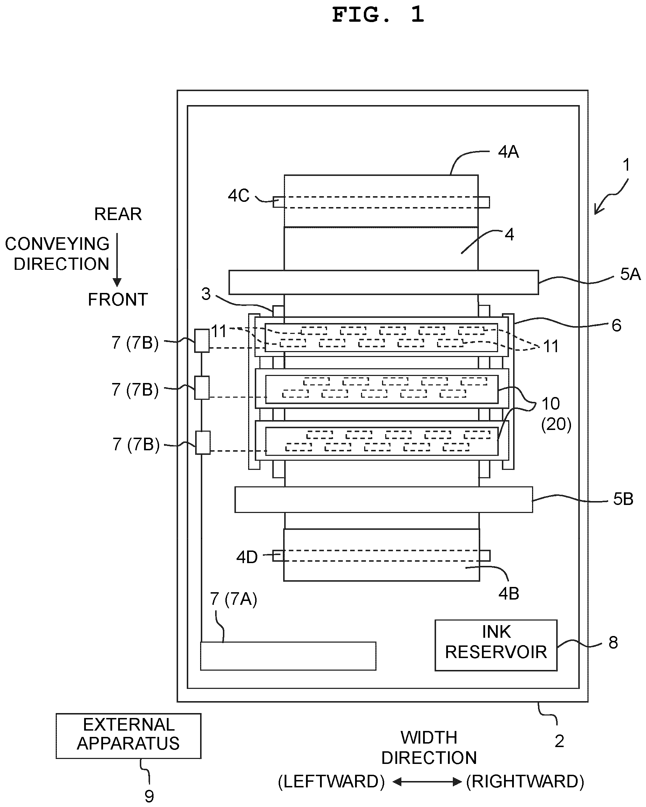

In the following, a printing apparatus 1 according to an embodiment of the present disclosure will be described with reference to the drawings. In FIG. 1, a conveying direction of a recording medium 4 corresponds to the front-rear direction of the printing apparatus 1. Further, a width direction of the recording medium 4 corresponds to the left-right direction of the printing apparatus 1. Furthermore, a direction orthogonal to the front-rear direction and the left-right direction, i.e., a direction perpendicular to the sheet surface of FIG. 1, corresponds to the up-down direction of the printing apparatus 1. The left-right direction is an example of a "first direction" of the present disclosure, and the front-rear direction and the conveying direction are an example of a "second direction" of the present disclosure.

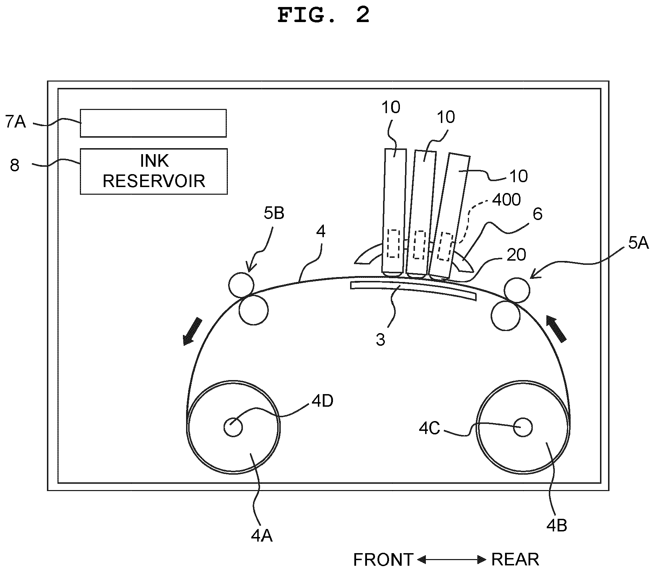

As depicted in FIGs. 1 and 2, the printing apparatus 1 includes a platen 3, three head bars 10, two conveying rollers 5A and 5B, an arch frame 6, a controller 7, three ink reservoirs 8, etc., which are accommodated in the inside of a casing 2. Note that in order to simplify the drawings, only one of the three ink reservoirs 8 is depicted in FIGs. 1 and 2.

As depicted in FIGs. 1 and 2, the recording medium 4 passes over the upper surface of the platen 3. The three head bars 10 are positioned above the platen 3 so as to face the platen 3. An ink is supplied to each of the head bars 10 from one of the ink reservoirs 8. The structure of the head bars 10 will be described later. Note that the three head bars 10 are fixed to the arch frame 6 in a state that the head bars 10 are aligned along the front-rear direction (the conveying direction of the recording medium 4). As depicted in FIG. 2, the arch frame 6 has an arch shape, and the three head bars 10 are inclined at mutually different angles with respect to a horizontal plane.

As depicted in FIGs. 1 and 2, the two conveying rollers 5A and 5B are positioned behind and in front of the platen 3, respectively. The two conveying rollers 5A and 5B are driven by a non-illustrated motor. As depicted in FIG. 2, the recording medium 4 is fed from a feeding roll 4A wound in a roll shape and taken up by a winding roll 4B. For example, the recording medium 4 is a roll sheet. Rotating shafts 4C and 4D rotated by a non-illustrated motor are fixed to the feeding roll 4A and the winding roll 4B, respectively. These two rotating shafts 4C and 4D and the two conveying rollers 5A and 5B cooperate to feed the recording medium 4 from the feeding roll 4A, to convey the recording medium downstream in the conveying direction (forward) so that the recording medium 4 passes over the platen 3, and are taken up by the winding roll 4B. The two rotating shafts 4C and 4D and the two conveying rollers 5A and 5B are an example of a conveyor of the present disclosure.

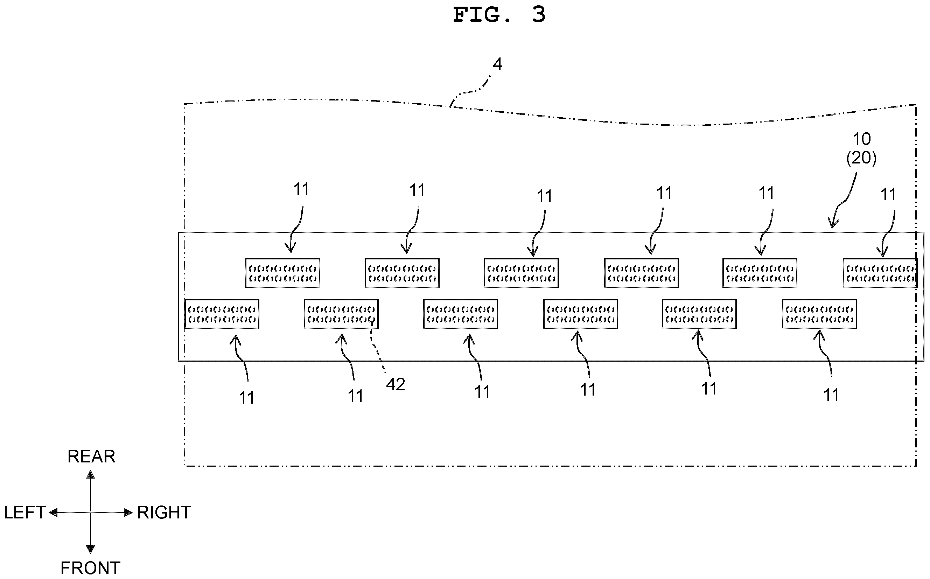

As depicted in FIG. 3, each of the head bars 10 includes a head group 20 having a plurality of heads 11 (e.g., twelve heads 11). Note that in FIG. 1, the number of heads 11 is reduced for the sake of simplifying the drawing. As depicted in FIG. 3, the plurality of heads 11 constructs two head rows disposed side by side in the front-rear direction. Each of the head rows includes six heads 11 aligned in the left-right direction. The positions in the front-rear direction of the six heads 11 aligned in the left-right direction in one head row are the same. Note that, however, in the following description, the phrase "the positions are same" does not mean that the positions are same in a strict sense; rather, the phrase intends to mean that the positions are the same within a manufacturing error and an attaching error. Note that the positions in the left-right direction of the heads 11 included in the two head rows are shifted from one another. In other words, the twelve heads 11 of the head group 20 are positioned in the staggered manner.

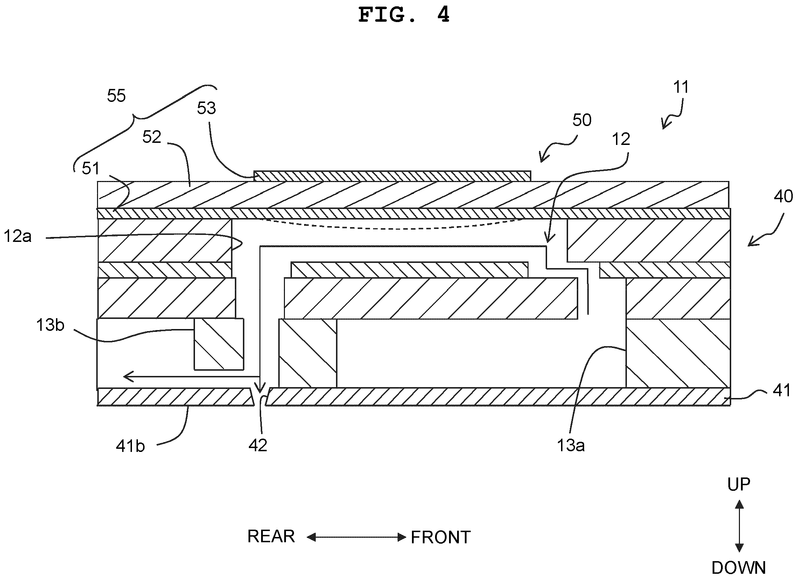

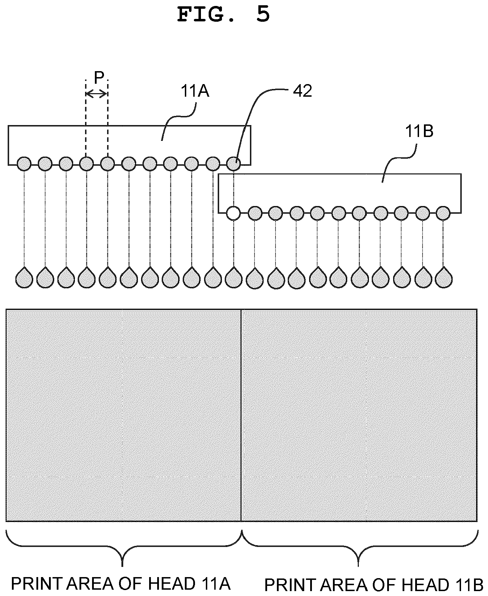

The lower surface of each of the heads 11 is a nozzle surface 41b (see FIG. 4) in which a plurality of nozzles 42 is disposed. In the following description, an area, of the nozzle surface 41b, in which the plurality of nozzles 42 is disposed is referred to as a nozzle area (see, for example, FIG. 5). Further, not all the plurality of nozzles 42 of the head 11 is not used for printing, and nozzles among the plurality of nozzles 42 of the head 11 which eject ink and which are used for the printing are referred to as usable nozzles. Note that in the present embodiment, although the head 11 includes the two nozzle rows as depicted in FIG. 3, this configuration is merely an example, and the head 11 may include two or more nozzle rows. Furthermore, in FIG. 3, although the number of nozzles 42 included in each of the nozzle rows is reduced for the sake of simplifying the drawing, the number of nozzles 42 included in each of the nozzle rows may be any number. For example, each of the nozzle rows may include 1000 or more nozzles 42. Note that although an intra-head channel is disposed inside the head 11, the shape and the like of the intra-head channel will be described later.

As described above, the twelve heads 11 of each of the head bars 10 (head group 20) construct the two head rows, and each of the heads 11 has two nozzle rows. A yellow ink is supplied from one of the three ink reservoirs 8 to the twelve heads 11 of a head bar 10 which is positioned at the rearmost (upstream-most in the conveying direction) among the three head bars 10. A magenta ink is supplied from another one of the three ink reservoirs 8 to the twelve heads 11 of a head bar 10 which is positioned second from the rear (second from the upstream in the conveying direction) among the three head bars 10. A cyan ink is supplied from one of the three ink reservoirs 8 to the twelve heads 11 of a head bar 10 which is positioned at the frontmost (most downstream in the conveying direction) among the three head bars 10. In such a manner, in the present embodiment, the inks are ejected from the three head bars 10 which are disposed side by side in the conveying direction in an order of a light (pale) color ink to a deep color ink from the upstream toward the downstream in the conveying direction. Note that in the present embodiment, although the printing apparatus 1 has the three head bars 10, the printing apparatus 1 may further have two head bars 10. Further, a white ink and a black ink may be ejected, respectively, from the two head bars 10. Note that each of the white ink, the yellow ink, the magenta ink, the cyan ink, and the black ink is, for example, an UV curable ink.

Next, a channel unit 40 and an actuator unit 50 constructing each of the heads 11 will be described, with reference to FIGs. 3 and 4. Since the structures of the channel unit 40 and the actuator unit 50 are common to the twelve heads 11, the channel unit 40 and the actuator unit 50 in one head 11 will be described.

As depicted in FIG. 4, the channel unit 40 is constructed of a plurality of metal plates and a nozzle plate 41 stacked in the up-down direction. In the plurality of metal plates, an ink channel such as an individual channel 12 including a pressure chamber 12a, a supply manifold 13a, and a return manifold 13b is constructed by the etching. The nozzle plate 41 is constructed, for example, of a polymeric synthetic resin material such as polyimide, etc., and is joined to the lower surfaces of the stacked metal plates by adhesive. The lower surface of the nozzle plate 41 is the above-described nozzle surface 41b. Note that the nozzle plate 41 may also be constructed of a metal material such as stainless steel, etc.

As depicted in FIG. 4, the individual channel 12 communicating with each of the nozzles 42, and the supply manifold 13a and the return manifold 13b communicating with the individual channel 12 are disposed in the inside of the channel unit 40. Although not depicted in the drawings, the supply manifold 13a and the return manifold 13b extend in the left-right direction (the direction perpendicular to the sheet surface of FIG. 4). The supply manifold 13a is connected to the tank 400 (see FIG. 2) positioned outside the head 11 via a non-illustrated ink supply port disposed in the channel unit 40. The return manifold 13b is connected to the tank 400 (see FIG. 2) positioned outside the head 11 via a non-illustrated ink discharge port disposed in the channel unit 40. This constructs an ink circulation route through which the ink fed from the tank 400 passes through the supply manifold 13a, the individual channel 12, and the return manifold 13b and returns to the tank 400.

Note that although not depicted in the drawings, a plurality of individual channels 12, each of which corresponds to one of the plurality of nozzles 42, are located so as to construct two individual channel rows extending in the left-right direction, in correspondence to the plurality of nozzles 42 which are located so as to construct the two nozzle rows extending in the left-right direction, as described above. Further, twelve supply manifolds 13a and twelve return manifolds 13b are disposed in the channel unit 40; each of the twelve supply manifolds 13a and the twelve return manifolds 13b communicate with individual channels 12, among the plurality of individual channels 12, constructing the two individual channel rows. With this, in the inside of the channel unit 40, a plurality of ink channels is constructed, each of the plurality of ink channels starting from the supply manifold 13a, passing the pressure chamber 12a of one of the plurality of individual channels 12, and reaching one of the nozzles 42 and the return manifold 13b. Note that the number of supply manifolds 13a and the number of return manifolds 13b disposed in the channel unit 40 are adjusted in accordance with the number of nozzles 42. Further, the number of individual channels 12 each communicating with a corresponding one of the supply manifolds 13a or the return manifolds 13b is also adjusted in accordance with the number of nozzles 42.

As depicted in FIG. 4, the pressure chamber 12a is disposed in each of the individual channels 12, and the actuator unit 50 is disposed at a location above a plurality of pressure chambers 12a each of which belongs to one of the plurality of individual channels 12. The actuator unit 50 includes a vibration plate 51 disposed on the upper surface of the channel unit 40 so as to cover all the pressure chambers 12a of the plurality of individual channels 12, a plurality of piezoelectric bodies 52 each of which is positioned on the upper surface of the vibration plate 51, at a position facing one of the pressure chambers 12a, and a plurality of individual electrodes 53 each of which is positioned on the upper surface of one of the plurality of piezoelectric bodies 52. As will be described later on, the vibration plate 51 functions as a common electrode. The vibration plate 51 as the common electrode, each of the plurality of individual electrodes 53, and each of the plurality of piezoelectric bodies 52 construct one driving element 55. Namely, the actuator unit 50 includes a plurality of driving elements 55 each of which corresponds to one of the plurality of nozzles 42.

The vibration plate 51 is a metallic plate which has a substantially rectangular shape in a plan view, and is made, for example, of an iron-based alloy such as stainless steel, a copper-based alloy, a nickel-based alloy, or a titanium-based alloy, etc. The upper surface of the vibration plate 51 having the electric conductivity is positioned below the plurality of piezoelectric bodies 52. Accordingly, the upper surface of the vibration plate 51 is capable of functioning as the common electrode. The vibration plate 51 as the common electrode is connected to a ground wiring of a non-illustrated driver IC which drives the actuator unit 50, and is held at the ground potential at all times. Note that the vibration plate 51 is not necessarily to be the metallic plate; for example, the vibration plate 51 may be constructed of a piezoelectric material which is the same as the material constructing the plurality of piezoelectric bodies 52, and that a metallic film as the common electrode may be formed on the upper surface of the vibration plate 51.

Each of the plurality of piezoelectric bodies 52 is made of a piezoelectric material composed primarily of lead zirconate titanate (PZT) which is a solid solution of lead titanate and lead zirconate and which is a ferroelectric substance. Each of the plurality of piezoelectric bodies 52 is polarized in a thickness direction (up-down direction) at least at an area facing the pressure chamber 12a (an area sandwiched between each of the plurality of individual electrodes 53 and the vibration plate 51). In the present embodiment, although the plurality of piezoelectric bodies 52 are disposed each corresponding to one of the plurality of pressure chambers 12a, the piezoelectric body 52 may be a layer of the piezoelectric body (piezoelectric layer) which is disposed continuously across the plurality of pressure chambers 12a, on the upper surface of the vibration plate 51. In such a case, the vibration plate 51 as the common electrode, each of the plurality of individual electrodes 53 and a part, of the piezoelectric body 52, which is sandwiched between each of the plurality of individual electrodes 53 and the vibration plate 51 constructs one driving element 55.

Next, the action of the driving element 55 of the actuator unit 50 at a time of ink ejection will be described. In a case where a predetermined driving potential is applied from the non-illustrated driver IC to a certain individual electrode 53 included in the plurality of individual electrodes 53, a difference in the potential is generated between the certain individual electrode 53 to which the driving potential is applied and the vibration plate 51 as the common electrode and maintained at the ground potential. With this, an electric field in the thickness direction is generated at a certain piezoelectric body 52, of the plurality of piezoelectric bodies 52, which is sandwiched between the certain individual electrode 53 and the vibration plate 51. The direction of the electric field is parallel to the polarization direction of the certain piezoelectric body 52. Accordingly, due to this electric field, an area (active area), of the certain piezoelectric body 52, which faces the certain individual electrode 53 contracts in a plane direction orthogonal to the thickness direction. Here, the vibration plate 51 which is positioned below the certain piezoelectric body 52 is fixed to the channel unit 40. Accordingly, accompanying the active area, of the certain piezoelectric body 52, which is positioned on the upper surface of the vibration plate 51 contracting in the plane direction, a part of the vibration plate 51 which covers a certain pressure chamber 12a, among the plurality of pressure chambers 12a, corresponding to the certain individual electrode 53 is deformed so as to project toward the certain pressure chamber 12a (unimorph deformation, see FIG. 4). In this situation, since the volume inside the certain pressure chamber 12a is reduced, the pressure of the ink inside the certain pressure chamber 12a is increased, thereby ejecting the ink from a nozzle 42, among the nozzles 42, communicating with the certain pressure chamber 12a.

The controller 7 includes a main controller 7A which controls the respective parts of the printing apparatus 1 except the head bars 10, and a plurality of head controllers 7B which controls the head bars 10 (see FIG. 1). The main controller 7A is connected to an external apparatus 9 such as a PC (see FIG. 1) to be capable of performing data communication with the external apparatus 9, and the main controller 7A controls the respective parts of the printing apparatus 1 based on print data transmitted from the external apparatus 9. Each of the plurality of head controllers 7B is disposed corresponding to one of the head bars 10. The controller 7 (main controller 7A and the plurality of head controllers 7B) includes an FPGA (Field Programmable Gate Array), an EEPROM (Electrically Erasable Programmable Read-Only Memory; EEPROM is a registered trade mark of Renesas Electronics Corporation), a RAM (Random Access Memory), etc. Note that the controller 7 may include a CPU (Central Processing Unit), or an ASIC (Application Specific Integrated Circuit), etc.

The main controller 7A controls the motor which drives the rotating shafts 4C and 4D and the motor which drives the two conveying rollers 5A and 5B, thereby causing the two conveying rollers 5A and 5B to convey the recording medium 4 in the conveying direction. Further, each of the head controllers 7B controls one of the three head bars 10 so as to eject the ink from the nozzles 42 toward the recording medium 4. In this manner, an image is printed on the recording medium 4.

### Structure of Head Bar 10

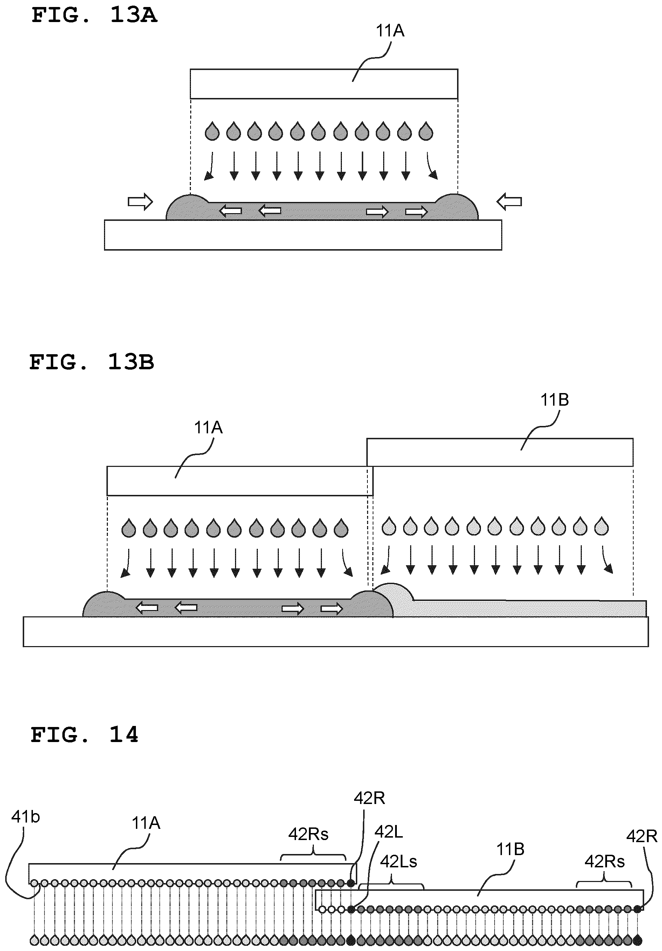

As depicted in FIG. 3, each of the head bars 10 has the plurality of heads 11 disposed in the staggered manner. In the following, focusing on two heads 11 which are included in the plurality of heads 11 and which are adjacent to each other in the left-right direction and shifted in the front-rear direction, one head 11 positioned on the left side is referred to as a head 11A, and the other head 11 positioned on the right side is referred to as a head 11B. As depicted in FIG. 14, a right area positioned on the side of the right end of the nozzle area of the nozzle surface 41b of the head 11A, and a left area positioned on the side of the left end of the nozzle area of the nozzle surface 41b of the head 11B overlap with each other in the left-right direction.

As depicted in FIG. 5, the head 11A and the head 11B are ideally positioned so that, in the left-right direction, a nozzle 42 at the right end of the head 11A and a nozzle 42 at the left end of the head 11B are located at the same relative positions. In this case, usable nozzles of the head 11A and usable nozzles of the head 11B are determined so that the right-end nozzle 42R of the head 11A is a nozzle located rightmost among the usable nozzles of the head 11A, and a nozzle 42 second from the left end of the head 11B is a nozzle located leftmost among the usable nozzles of the head 11B. In this case, since the distance in the left-right direction between the nozzle 42 located rightmost among the usable nozzles of the head 11A and the nozzle 42 located leftmost among the usable nozzles of the head 11B is equal to a pitch P, the head 11A and the head 11B can be treated as one long head. However, manufacturing errors in the head 11A and the head 11B, or mounting errors of the head 11A and the head 11B to head bar 10, result in the misalignment of the nozzle 42 at the right end of the head 11A and the nozzle 42 at the left end of the head 11B relative to the left-right direction. Further, even in a case where the head 11A and the head 11B are positioned so that the nozzle 42 at the right end of the head 11A and the nozzle 42 at the left end of the head 11B are at the same relative positions in the left-right direction, the nozzle 42 at the right end of the head 11A and the nozzle 42 at the left end of the head 11B are deviated in the left-right direction, in some cases, due to manufacturing errors in the head 11A and the head 11B or mounting errors of the head 11A and the head 11B to the head bar 10. In this case, even in a case where the usable nozzles of the head 11A and the usable nozzles of the head 11B are determined as described above, the distance in the left-right direction between the nozzle 42 at the right end of the usable nozzles of the head 11A and the nozzle 42 at the left end of the usable nozzles of the head 11B (the nozzle 42 second from the left end of the head 11B) might become greater than the pitch P. In such a case, the landing position of the ink droplet ejected from the nozzle 42 at the right end of the usable nozzles of the head 11A and the landing position of the ink droplet ejected from the nozzle 42 at the left end of the usable nozzles of the head 11B are separated in the left-right direction, as compared to a case where the nozzle 42 at the right end of the head 11A and the nozzle 42 at the left end of the head 11B are at the same relative positions in the left-right direction. In a case where the landing positions of the ink are separated in the left-right direction, a so-called white streak occurs. A user who sees the printed matter can easily find even a small white streak, which requires prevention of the occurrence of white streak in an ensured manner.

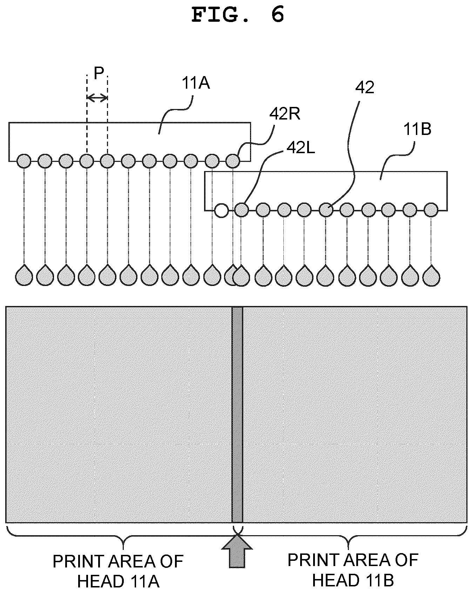

In this manner, in the case where the head 11A and the head 11B are positioned so that the nozzle 42 at the right end of the head 11A and the nozzle 42 at the left end of the head 11B are at the same relative positions in the left-right direction, the distance in the left-right direction between the nozzle 42 at the right end of the usable nozzle of the head 11A and the nozzle 42 at the left end of the usable nozzle of the head 11B becomes greater than the pitch P, due to the manufacturing errors in the heads 11A and 11B and the mounting errors of the heads 11A and 11B to the head bar 10. This may lead to an occurrence of the white streak. Therefore, in the present embodiment, in order to reduce the occurrence of white streaks in the ensured manner, the side of the right end of the nozzle area of the nozzle surface 41b of the head 11A and the side of the left end of the nozzle area of the nozzle surface 41b of the head 11B are made to overlap with each other in the left-right direction, as depicted in FIG. 6. Further, a nozzle 42 which is included in the nozzles 42 on the side of the left end of the nozzle area of the head 11B and of which distanced in the left-right direction from the nozzle 42 located at the right end of the head 11A is the pitch P or less is identified, and the usable nozzles of the head 11B are determined so that the identified nozzle 42 becomes the nozzle at the left end of the usable nozzles of the head 11B. In other words, regarding the head 11A, the usable nozzles are determined so that the nozzle 42 at the right end of the head 11A becomes the nozzle at the right end of the usable nozzles, and regarding the head 11B, the usable nozzles are determined so that the nozzle 42 of which distance in the left-right direction from the right-end nozzle 42R of the head 11A is the pitch P or less becomes the nozzle at the left end of the usable nozzles. In the following description, the nozzle at the right end of the usable nozzles of the head 11A is referred to as a right-end nozzle 42R, and the nozzle at the left end of the usable nozzles of the head 11B is referred to as a left-end nozzle 42L. The right-end nozzle 42R is an example of a "first nozzle" of the present disclosure, and the left-end nozzle 42L is an example of a "second nozzle" of the present disclosure. Note that in the present embodiment, among the plurality of nozzles 42 of the head 11B, not all of the nozzles 42 which overlap with the nozzle area of the head 11A are used for the printing, and a nozzle which is located on the left side with respect to the left-end nozzle 42L is not determined to be a usable nozzle. In a case where a nozzle 42 which is not one of the usable nozzles in the present embodiment, that is, the nozzle 42 located on the left side of the left-end nozzle of the head 11B is used, a so-called shingling technique is used so as to form one dot with the nozzle 42 of the head 11A and the nozzle 42 of the head 11B cooperating with each other. In order to perform such control, the controller 7 needs to create print data for shingling, which makes the control complicated. In the heads 11A and 11B of the present embodiment, the controller 7 does not need to create such print data for shingling.

In a case where the resolution of the heads 11A and 11B is 1200 dpi, the width of one pixel (1 px) is 21.16 µm, and the pitch P of the nozzles 42 is also 21.16 µm. In a case where the distance in the left-right direction between the right-end nozzle 42R and the left-end nozzle 42L is equal to the pitch P (corresponding to 1 px), the overlap between the print area of the head 11A and the print area of the head 11B is 0 px, and the width of the print area of the two nozzles 42R and 42L is 2 px. In contrast to this, for example, in a case where the distance in the left-right direction between the right-end nozzle 42R and the left-end nozzle 42L is 50% (corresponding to 0.5 px) of the pitch P, the overlap between the print area of the head 11A and the print area of the head 11B is 0.5 px, and the width of the print area of the two nozzles 42R and 42L is 1.5 px. Note that in the following description, the overlap between the print area of the head 11A and the print area of the head 11B is simply referred to as "overlap between print areas".

A case is considered where the overlap between the print areas is 0 px and where ink droplets of the same size are continuously ejected from the right-end nozzle 42R and the left-end nozzle 42L, respectively. In a case where an amount of the ink ejected from each of the right-end nozzle 42R and the left-end nozzle 42L is 100%, an amount of 200% of the ink would consequently land on a print area with a width of 2.0 px. In contrast to this, a case is considered where the overlap between the print areas is 0.5 px and where the amount of 100% of the ink is ejected from each of the right-end nozzle 42R and the left-end nozzle 42L (see FIG. 6) is considered. In this case, the amount of 200% of the ink would consequently land on the print area with the width of 1.5 px. Therefore, the ink density (an amount of the ink which lands on a print area of unit width) becomes greater than in the case where the overlap between the print areas is 0 px, and the possibility that the color streaks might occur increases.

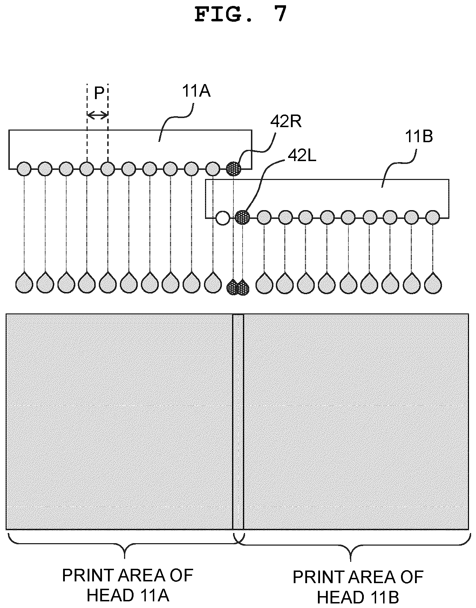

A case is considered where the overlap between the print areas is 0.5 px and where an amount of 75% of the ink is ejected from each of the right-end nozzle 42R and the left-end nozzle 42L (see FIG. 7). In this case, an amount of 150% of the ink would consequently land on the print area with the width of 1.5 px. In this case, since the ink density to an extent which is the same as the ink density in a case where the overlap between the print areas is 0 px can be achieved, the occurrence of the color streak can be reduced.

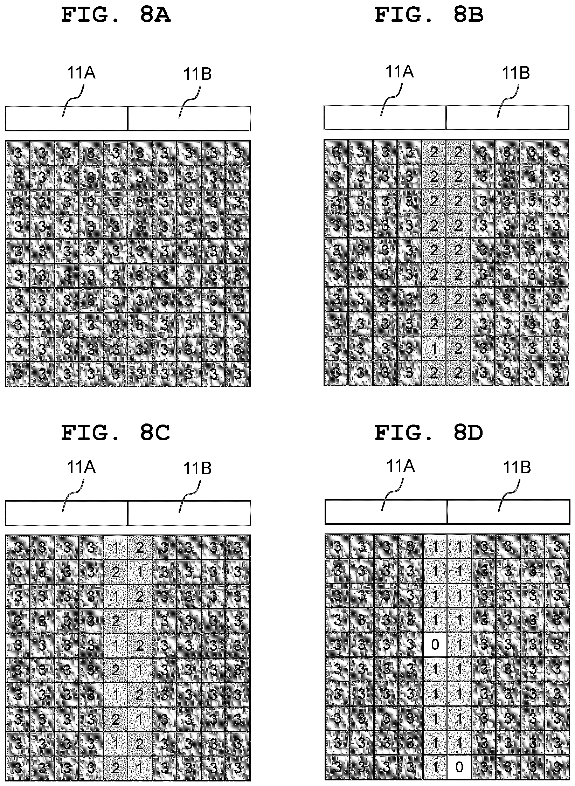

For example, in a case where the overlap between the print areas is 6 µm (approximately 0.28 px), by reducing the amount of the ink ejected from each of the right-end nozzle 42R and the left-end nozzle 42L by approximately 14%, the ink density to the extent which is the same as the ink density in the case where the overlap between the print areas is 0 px can be achieved (see FIG. 8B). Further, in a case where the overlap between the print areas is 11 µm (approximately 0.52 px), by reducing the amount of the ink ejected from each of the right-end nozzle 42R and the left-end nozzle 42L by approximately 26%, the ink density to the extent which is the same as the ink density in a case where the overlap between the print areas is 0 px can be achieved (see FIG. 8C). Furthermore, in a case where the overlap between the print areas is 18 µm (approximately 0.85 px), by reducing the amount of ink ejected from each of the right-end nozzle 42R and the left-end nozzle 42L by approximately 43%, the ink density to the extent which is the same as the ink density in a case where the overlap between the print areas is 0 px can be achieved (see FIG. 8D). In such a manner, in the present embodiment, the amount of ink ejected from each of the right-end nozzle 42R and the left-end nozzle 42L is adjusted in accordance with the overlap between the print areas so as to realize the ink density to the extent which is the same as the ink density in the case where the overlap between the print areas is 0 px.

Note that such a configuration can be considered wherein, for each of the combinations of the two heads 11, each of the plurality of the head controllers 7B determines the size of the ink droplet to be ejected from the right-end nozzle 42R and the size of the ink droplet to be ejected from the left-end nozzle 42L in accordance with the overlap between the print areas, and the head controller 7B always causes an ink droplet of the determined size to be ejected from the right-end nozzle 42R and causes an ink droplet of the determined size to be ejected from the left-end nozzle 42L, thereby reducing the amount of the ink ejected from the right-end nozzle 42R and the amount of ink ejected from the left-end nozzle 42L. For example, in the above example, in a case where the amount of ink ejected from the right-end nozzle 42R and the amount of ink ejected from the left-end nozzle 42L are both intended to be reduced by about 26%, such a configuration can be considered wherein the head controller 7B makes the size of the ink droplet ejected from the right-end nozzle 42R and the size of the ink droplet ejected from the left-end nozzle 42L smaller by about 26% than the size of the ink droplet ejected from other nozzles 42 other than the right-end nozzle 42R and the left-end nozzle 42L. Further, in a case where the amount of ink ejected from the right-end nozzle 42R and the amount of ink ejected from the left-end nozzle 42L are both intended to be reduced by about 43%, such a configuration can be considered wherein the head controller 7B makes the size of the ink droplet ejected from the right-end nozzle 42R and the size of the ink droplet ejected from the left-end nozzle 42L smaller by about 43% than the size of the ink droplet ejected from the other nozzles 42 other than the right-end nozzle 42R and the left-end nozzle 42L. However, usually, the size of the ink droplet ejected from each of the plurality of heads 11 is limited to a plurality of predetermined kinds of sizes. For example, in each of the plurality of heads 11 of the present embodiment, ink droplets of three kinds of sizes which are a small droplet (DS1), a middle droplet (DS2) and a large droplet (DS3) can be ejected. For example, in a certain ink among the white ink, the yellow ink, the magenta ink, the cyan ink and the black ink, an ink droplet of the large droplet is 3.2 pl, an ink droplet of the middle droplet is 2.8 pl, and an ink droplet of the small droplet is 2.0 pl. In addition to this, the ejection of ink droplets of the sizes according to the overlap between the print areas from the right-end nozzle 42R and the left-end nozzle 42L for each of the plurality of heads 11 is extremely difficult. The reason for this is that the above-described three kinds of sizes of ink droplets which are the large droplet, the middle droplet and the small droplet are not sufficient, and more settings of the sizes of ink droplets must be prepared in order to eject a plurality of ink droplets having mutually different sizes according to the overlap between the print areas.

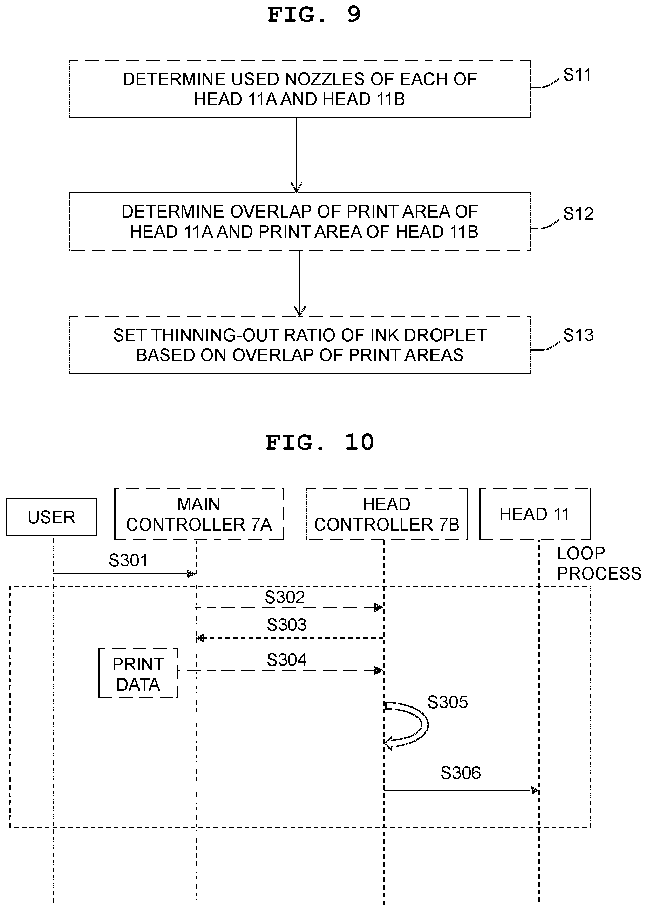

Therefore, in the present embodiment, a correction is performed by the following procedure so as perform the adjustment to thereby reduce the amount of the ink ejected from the right-end nozzle 42R and the amount of the ink ejected from the left-end nozzle 42L by adjusting the ratio among the large droplet, the middle droplet, the small droplet and non-ejection, in accordance with the overlap between the print areas, in a case where a dot line formed of a plurality of dots continuous in the conveying direction is to be formed, so as to realize the ink density to the extent which is the same as the ink density in the case where the overlap between the print areas is 0 px. Such a correction performed with respect to the right-end nozzle 42R and the left-end nozzle 42L will be hereinafter referred to as a stitch correction. In the following, the stitch correction will be described with reference to a flowchart depicted in FIG. 9 and a printing sequence diagram depicted in FIG. 10. Note that in the following description, the subject of the control is the head controller 7B.

As depicted in FIG. 9, for each of two heads 11 adjacent to each other in the left-right direction, the usable nozzles of a head 11 positioned on the left side and the usable nozzles of a head 11 positioned on the right side are determined (step S11). In the following, the head 11 positioned on the left side is referred to as a head 11A, and the head 11 positioned on the right side is referred to as a head 11B. As described above, for the head 11A, the usable nozzles are determined so that a nozzle 42 on the right end is a nozzle at the right end of the usable nozzles of the head 11A. For the head 11B, the usable nozzles are determined so that a nozzle 42 of which distance in the left-right direction from the right-end nozzle 42 of the head 11A is the pitch P or less is a nozzle at the left end of the usable nozzles of the head 11B. Further, a landing position of the ink ejected from the right-end nozzle 42R located at the right end of the usable nozzles of the head 11A and a landing position of the ink ejected from the left-end nozzle 42L located at the left end of the usable nozzles of the head 11B are measured. With this, the distance in the left-right direction between the right-end nozzle 42R and the left-end nozzle 42L is calculated, and the overlap between the print area of the head 11A and the print area of the head 11B is determined (step S12). Then, based on the overlap between the print areas, a thinning-out ratio of the ink droplet, i.e., the extent to which the amount of the ink ejected from each of the right-end nozzle 42R and the left-end nozzle 42L is reduced relative to the amount of the ink ejected from other nozzles 42 other than the right-end nozzle 42R and the left-end nozzle 42L, is set (step S13). Note that the processes up to this point are performed by the manufacturer or a user of the printing apparatus 1 before the printing is started. For example, after carrying in and installing the printing apparatus 1, these processes can be performed, and information on the usable nozzles for each of the heads 11 and information on the thinning-out ratio of the ink droplet can be stored in the EEPROM of the main controller 7A or of the head controller 7B. Note that the measurement of the landing position of the ink ejected from the right-end nozzle 42R of the head 11A and the landing position of the ink ejected from the left-end nozzle 42L of the head 11B may be performed, for example, by the following procedure. First, the manufacturer or the user of the printing apparatus 1 prints a test pattern using the printing apparatus 1, and causes a scanner connected to the printing apparatus 1 to read the test pattern. Then, based on the result of the scan, the main controller 7A measures the landing position of ink ejected from the right-end nozzle 42R of the usable nozzles of the head 11A, and the landing position of ink ejected from the left-end nozzle 42L of the usable nozzles of the head 11B. Then, the main controller 7A calculates the distance in the left-right direction between the right-end nozzle 42R and the left-end nozzle 42L from the measured landing positions, and the main controller 7A further determines the overlap between the print area of the head 11A and the print area of the head 11B.

Next, a printing process will be described. As depicted in FIG. 10, in a case where a print starting instruction from the user of the printing apparatus 1 is input to the main controller 7A (step S301), the main controller 7A transmits a print command to each of the head controllers 7B (step S302). Each of the head controllers 7B which receives the print command requests the main controller 7Ato transmit print data (step S303) and receives the print data (step S304). In a case where each of the head controllers 7B receives the print data, each of the head controllers 7B corrects the print data according to the thinning-out ratio which has been set (step S305). Then, each of the head controllers 7B transmits the corrected print data to the head 11 (step S306). The printing apparatus 1 repeats the processes from step S302 to step S306 until the printing is completed.

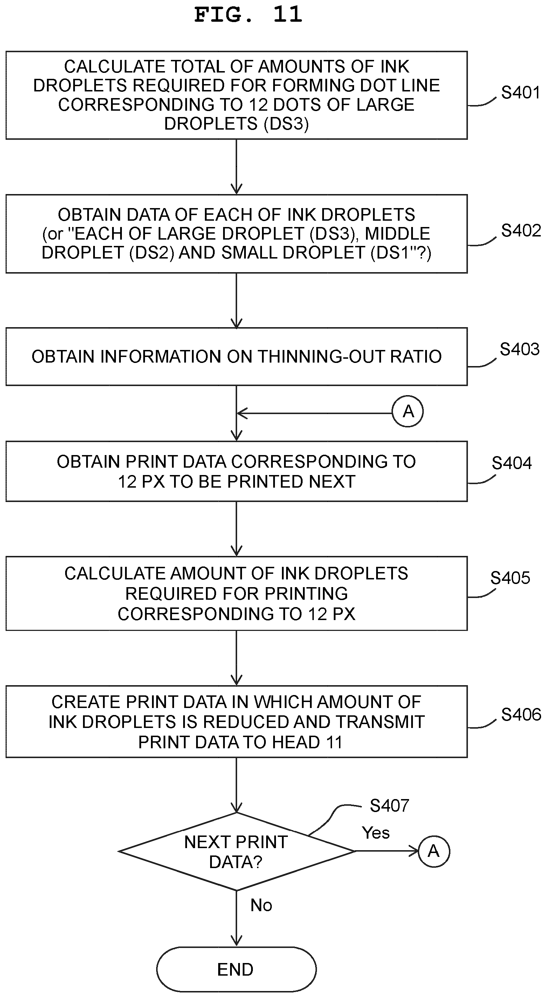

Next, the correction of the print data according to the thinning-out ratio in the process of step S305 will be described with reference to FIG. 11. First, the head controller 7B calculates the total of the amounts of ink droplets required to form a dot line corresponding to twelve dots each of which is the large dot (DS3) (step S401). Note that the term "dot line corresponding to twelve dots" means a dot line corresponding to twelve dots which are continuous in the conveying direction of the recording medium 4. Next, the head controller 7B obtains data of each of the ink droplet of the large droplet (DS3), the ink droplet of the middle droplet (DS2) and the ink droplet of the small droplet (DS1) from the EEPROM of the main controller 7A or of the head controller 7B (step S402). Further, the head controller 7B obtains information on the thinning-out ratio from the EEPROM of the main controller 7A or of the head controller 7B (step S403). This information on the thinning-out ratio is information on the thinning-out ratio of the ink droplet set in the above-described step S13, and is information stored in the EEPROM of the main controller 7A or of the head controller 7B. Note that the processes from step S401 to step S403 may be performed before or after the process (step S304) in which the head controller 7B receives the print data.

The head controller 7B obtains print data corresponding to 12 px to be printed next from the print data obtained in the process of step S304 (step S404). The head controller 7B calculates the amount of ink droplets required for printing corresponding to 12 px from the print data corresponding to 12 px (S405). The head controller 7B calculates the amount of ink droplets to be reduced based on the information on the thinning-out ratio obtained in the process of step S403, creates print data in which the amount of ink droplets is reduced by the calculated amount, and transmits the print data to the head 11 (step S406). In this situation, in a case where the same ejection pattern is repeated, an area formed by this repetition may become more conspicuous than other areas of the recording medium 4. In view of this, the head controller 7B can create multiple print data each corresponding to 12 px so that an ejection pattern of a dot line corresponding to twelve dots in a certain area (first area) of the recording medium 4 and an ejection pattern of a dot line corresponding to twelve dots in a second area positioned downstream in the conveying direction of the first area of the recording medium 4 are mutually different. For example, the head controller 7B can create the multiple print data each corresponding to 12 px so that an ejection pattern of a dot line corresponding to twelve dots of the first printing is different from an ejection pattern of a dot line corresponding to twelve dots of the tenth printing. For example, in a case where the overlap between the print areas is 6 µm (about 0.28 px), as described above, the head controller 7B reduces the amount of ink droplet ejected from the right-end nozzle 42R and the amount of the ink droplet ejected from the left-end nozzle 42L each by about 14%, thereby realizing the ink density to the extent which is the same as the ink density in a case where the overlap between the print areas is 0 px (see FIG. 8B). In the example of FIG. 8B, among the total of 24 dots (12 dots x 2 nozzles (the right-end nozzle 42R and the left-end nozzle 42L)), 23 dots are middle droplets (DS2) and 1 dot is small droplet (DS1). Further, the head controller 7B can create the multiple print data each corresponding to 12 px so that, for example, a position of appearance of one small droplet (DS1) in the ejection pattern of the dot line corresponding to twelve dots of the first printing is different from the position of appearance of the one small droplet (DS1) in the ejection pattern of the dot line corresponding to twelve dots of the tenth printing. This depends on whether the small droplet (DS1) is ejected from the right-end nozzle 42R or the left-end nozzle 42L, or which of the 12 dots ejected continuously by one nozzle contains the small droplet (DS1). In such a manner, the creation of the multiple print data each corresponding to 12 px so that the ejection pattern of the dot line corresponding to twelve dots in the first area is different from the ejection pattern of the dot line corresponding to twelve dots in the second area is also effective in an edge correcting process which is to be described later. After transmitting the print data to the head 11, the head controller 7B determines whether there remains print data corresponding to the next 12px (step S407); in a case where there remains the print data corresponding to the next 12px (step S407: YES), the head controller 7A returns to the process of step S404 so as to obtain the print data corresponding to the next 12px. In a case where there remains no print data corresponding to the next 12px (step S407: NO), the head controller 7B ends the printing.

Note that in the process of step S406, the head controller 7B first performs a process of reducing the amount of ink droplet by changing the large droplet (DS3) to the middle droplet (DS2). In a case where the amount of ink droplet cannot be reduced by the required amount even in a case where the large droplet (DS3) is changed to the middle droplet (DS2), then the head controller 7B performs the process of reducing the amount of the ink droplet by changing the middle droplet (DS2) to the small droplet (DS1). In a case where the amount of the ink droplet cannot be reduced by the required amount even in a case where the middle droplet (DS2) is changed to the small droplet (DS1), then the head controller 7Aperforms the process of reducing the amount of the ink droplet by changing the small droplet (DS1) to the non-ejection (Null). Note that in a case where the non-ejection occurs continuously, an area on which the ink has not landed might be visually conspicuous. In view of this, in a case where the non-ejection (Null) occurs continuously for 2 px, the head controller 7B does not perform the process of changing the small droplet (DS1) to the non-ejection (Null). However, since the small droplet (DS1) is originally intended to be changed to the non-ejection (Null) so as to lower the ink density, in a case where the small droplet (DS1) is not changed to the non-ejection (Null), the ink density might not be reduced to a target ink density, i.e., the ink density to the extent which is the same as the ink density in the case where the overlap between the print areas is 0 px. Therefore, in the case where the small droplet (DS1) is not changed to the non-ejection (Null), the small droplet (DS1) is preferably changed to the non-ejection (Null) in another dot instead. In a case where the head controller 7A performs the process of changing the small droplet (DS1) to the non-ejection (Null) in another dot, the head controller 7B preferably changes the small droplet (DS1) to the non-ejection (Null) regarding a nozzle 42 which is not adjacent, in the left-right direction and the conveying direction, to nozzles 42 which are the non-ejection (Null). Note that in a case where the non-ejection (Null) continues for 2 px in the conveying direction, not performing the process of changing the small droplet (DS1) to the non-ejection (Null) is also effective in the edge correcting process described later. Furthermore, since the right-end nozzle 42R and the left-end nozzle 42L are the nozzles adjacent in the left-right direction, also in a case where both the right-end nozzle 42R and the left-end nozzle 42L are the non-ejection (Null) at the same time, the area on which the ink has not landed might become visually conspicuous. In view of this, the head controller 7B can perform the process of reducing the amount of the ink droplet so that the right-end nozzle 42R and the left-end nozzle 42L are not the non-ejection (Null) at the same time in the process of step S406. In such a case where the non-ejection (Null) is continuous for 2 px in the left-right direction, the head controller 7B not performing the process of changing the small droplet (DS1) to the non-ejection (Null) is also effective in the edge correcting process described later. Note that among the usable nozzles of the head 11A, a nozzle 42 adjacent to the left of the right-end nozzle 42R is referred to as a first adjacent nozzle; and among the usable nozzles of the head 11B, a nozzle 42 adjacent to the right of the left-end nozzle 42L is referred to as a second adjacent nozzle. The following case will be considered where the first adjacent nozzle to the left of the right-end nozzle 42R and the second adjacent nozzle to the right of the left-end nozzle 42L are the non-ejection (Null) as in a case where an image formed by dots of the ink ejected from the right-end nozzle 42R and the left-end nozzle 42L, is, for example, a thin line. In a case where the correction (stitch correction) of reducing the amount of the ink ejected from each of the right-end nozzle 42R and the left-end nozzle 42L as described above is performed in this case, the decrease in the ink density of the dot line formed by the ink droplets ejected from the right-end nozzle 42R and the left-end nozzle 42L might become conspicuous. In view of this, in a case where the first adjacent nozzle to the left of right-end nozzle 42R and the second adjacent nozzle to the right of the left-end nozzle 42L are the non-ejection (Null), the head controller 7B can be configured not to perform the above-described stitch correction. With this, the decrease in the print quality due to the decrease in the ink density of the dot line becoming conspicuous can be prevented.

FIGs. 8A to 8D depict examples of print data corrected by the above-described procedure. The numbers aligned horizontally indicate what size of an ink droplet is ejected from which one of the respective nozzles 42, and the numbers 3, 2, or 1 indicates that a large droplet (DS3), a middle droplet (DS2), or a small droplet (DS1) is ejected from each of the nozzles 42. The number 0 indicates the non-ejection (null). The vertical alignment indicates data corresponding to continuous 12 px. FIG. 8A is an example of print data in the case where the overlap between the print areas is 0 µm (0 px). FIG. 8B is an example of print data in the case where the overlap between the print areas is 6 µm (about 0.28 px) wherein the amount of the ink ejected from the right-end nozzle 42R and the amount of the ink ejected from the left-end nozzle 42L are each corrected to be reduced by about 14%. FIG. 8C is an example of print data in the case where the overlap between the print areas is 11 µm (about 0.52 px), and the amount of the ink ejected from the right-end nozzle 42R and the amount of the ink ejected from the left-end nozzle 42L are each corrected to be reduced by about 26%. FIG. 8D is an example of print data in the case where the overlap between the print areas is 18 µm (about 0.85 px), and the amount of the ink ejected from the right-end nozzle 42R and the amount of the ink ejected from the left-end nozzle 42L are each corrected to be reduced by about 43%. By performing such a correction, the ink density to the extent which is the same as the ink density in the case where the overlap between the print areas is 0 px is realized. In such a manner, the head controller 7B sets each of the size of the ink droplet ejected from the right-end nozzle 42R and the size of the ink droplet ejected from the left-end nozzle 42L to one of the four types which are the large droplet, the middle droplet, the small droplet, and the non-ejection, in the print data corresponding to 12 px continuous in the conveying direction. With this, although only one of the above-described four types can be selected at 1 px, in a case where the entire area of 12px is seen, the amount of the ink ejected from the right-end nozzle 42R and the amount of the ink droplet ejected from the left-end nozzle 42L can be adjusted so that the ink density corresponds to the overlap between the print areas.

Next, the occurrence of the color streak in a case where the ink is ejected at a high duty will be described, and then a process of suppressing the occurrence of such a color streak (hereinafter referred to as an "edge correcting process") will be described.

As described above, in each of the head bars 10, the plurality of heads 11 are disposed in the staggered manner. Therefore, the two heads 11 adjacent to each other in the left-right direction are shifted from each other in the front-rear direction. In the following description, such a configuration is assumed wherein, in the two heads 11 adjacent to each other in the left-right direction, the head 11A positioned on the left side is positioned upstream in the conveying direction, and the head 11B positioned on the right side is positioned downstream in the conveying direction.

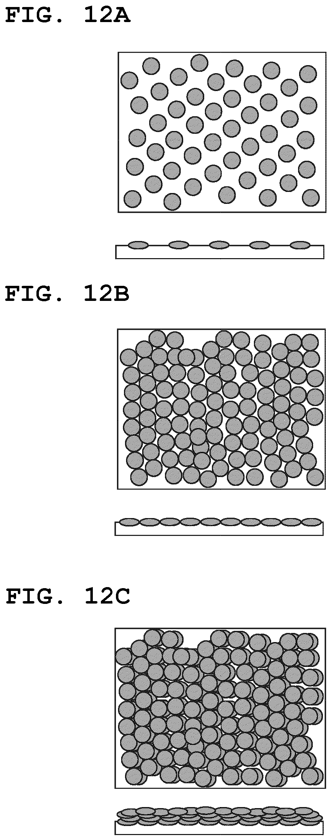

As depicted in FIG. 12A, in a case where the density of the ejected ink is low due to a low frequency of ejecting the ink droplet and/or a small size of the ink droplet ejected from the head 11, voids each of which is between the dots formed by the landed ink droplets and on each of which the ink droplet has not landed are observed. As depicted in FIG. 12B, in a case where the density of the ink is increased by increasing the frequency of ejecting the ink droplet and/or by increasing the size of the ink droplet, the voids each of which is between the dots formed by the landed ink droplets and on each of which the ink droplet has not landed are reduced. As depicted in FIG. 12C, in a case where the density of the ink is increased by further increasing the frequency of ejecting the ink droplet and/or by further increasing the size of the ink droplet, the voids each of which is between the dots formed by the ink droplets and on each of which the ink droplet has not landed are not present, and such a state is generated that ink droplets land, respectively, on top of the ink droplets which have already landed. A mode in which the printing is performed at a high ink density so that the ink droplets land, respectively, on top of the ink droplets which have already landed, as depicted in FIG. 12C, is an example of a "high duty mode" of the present disclosure; and a mode in which the printing is performed at an ink density which is lower than the ink density of the high duty mode, for example, such an ink density as depicted in each of FIGs. 12A and 12B, is an example of a "low duty mode" of the present disclosure.

As depicted in FIG. 13A, in a case where the printing is performed in the high duty mode, an ink droplet which lands on top of the ink droplet which has already landed flows outward as wetting and spreading on the recording medium 4. On the other hand, in an outer edge part of an area on which the ink has landed, the ink droplet tends to remain in the outer edge part due to the effect of the surface tension so as not to wet and spread outward on the recording medium 4 too much. Therefore, the outer edge part of the area on which the ink has landed is in a state that the ink density is higher than the ink density in an area inside the outer edge part. Note that the plurality of heads 11 of the present embodiment are disposed in the staggered manner, and the head 11A is positioned on the upstream side of the conveying direction compared to the head 11B. Further, as described above, the print area of the head 11A and the print area of the head 11B partially overlap each other. Therefore, as depicted in FIG. 13B, in the overlap part between the print area of the head 11A and the print area of the head 11B, after the print area on which the ink droplets ejected from head 11A have landed is formed, ink droplets ejected from the head 11B further land on top of the print area. (Note that in FIG. 13B, although the positions in the up-down direction of the head 11A and the head 11B are depicted as being different from each other to make the drawing easier to see, the positions in the up-down direction of the head 11A and head 11B are actually the same.) In particular, in a case where the printing is performed in the high duty mode, the outer edge part of the print area of the head 11A is in the state that the ink density is high, and further the outer edge part of the print area of the head 11B overlaps with the outer edge part of the print area of the head 11A. Therefore, in the case where the printing is performed in the high duty mode, the ink density is higher in the overlap part between the print area of the head 11A and the print area of the head 11B and in the vicinity thereof than the ink density in another part other than the overlap part and the vicinity thereof. Due to this, in the case where the printing is performed in the high duty mode, a color streak might occur in the overlap part between the print area of the head 11A and the print area of the head 11B and in the vicinity thereof, in some cases.

In the present embodiment, in the case where the printing is performed in the high duty mode, the head controller 7B performs a process (edge correcting process) of reducing not only the amount of the ink droplet ejected from the right-end nozzle 42R of the usable nozzles of the head 11A and the amount of the ink droplet ejected from the left-end nozzle 42L of the usable nozzles of the head 11B, but of reducing also the amount of the ink droplet ejected from each of a plurality of nozzles 42 counted from the right end of the usable nozzles of the head 11A (hereinafter referred to as a plurality of right-end nozzles 42Rs; see FIG. 14) and the amount of the ink droplet ejected from each of a plurality of nozzles 42 counted from the left end of the usable nozzles of the head 11B (hereinafter referred to as a plurality of left-end nozzles 42Ls; see FIG. 14). In a case where the printing is performed in the low duty mode, the head controller 7B does not need to perform the edge correcting process. Therefore, in the case where the printing is performed in the low duty mode, the head controller 7B may perform only the above-described stitch correcting process, without performing the edge correcting process. Further, even regarding a nozzle 42 which is located in the vicinity of the end part in the left-right direction of each of the plurality of heads 11, in a case where this nozzle 42 does not overlap with another head 11, the head controller 7B may not perform the edge correcting process. Note that, also in the edge correcting process, similarly to the above-described stitch correcting process, the head controller 7B adjusts the ratio among the large droplet, the middle droplet, the small droplet and the non-ejections in the case wherein a dot line formed by the plurality of dots continuous in the conveying direction is to be formed, thereby adjusting the amount of the ink droplet ejected from each of the plurality of right-end nozzles 42Rs and/or the amount of the ink droplet ejected from each of the plurality of left-end nozzles 42Ls to be reduced than the amount of the ink droplet ejected from the other nozzles 42. Note, however, that the head controller 7B can adjust the ratio among the large droplet, the middle droplet, the small droplet and the non-ejection independently by the stitch correcting process and the edge correcting process. That is, the head controller 7B can make the ejection pattern of ejecting ink droplets of the different sizes (e.g., the large droplet, the middle droplet, etc.) from the right-end nozzle 42R and the ejection pattern of ejecting ink droplets of the different sizes (e.g., the large droplet, the middle droplet, etc.) from each of the nozzles 42 other than the right-end nozzle 42R among the plurality of right-end nozzles 42Rs different from each other in a case where a dot line group is to be formed in the high duty mode. Note that the color streak occurring in the overlap part between the print area of the head 11A and the print area of the head 11B and in the vicinity thereof does not necessarily occur on both sides of the overlap part, and the color streak might occur only on either the left side or the right side of the overlap area, in some cases. Therefore, the head controller 7B performs the process of reducing the amount of the ink droplets ejected from at least one of the plurality of right-end nozzles 42Rs or the plurality of left-end nozzles 42Ls, depending on the location of the occurrence of the color streak, to be smaller than the amount of ink droplets ejected from the other nozzles 42 other than the plurality of right-end nozzles 42Rs and the plurality of left-end nozzles 42Ls. For example, the head controller 7B does not perform the edge correcting process regarding the right-end nozzles 42Rs of the head 11A positioned on the upstream side of the conveying direction, whereas the head controller 7A can perform the edge correcting process only regarding the left-end nozzles 42Ls of the head 11B positioned on the downstream side of the conveying direction. In a case where the head 11B ejects ink droplets, the head 11A positioned on the upstream side has already ejected the ink droplets, so in a case where the ink from the head 11B positioned on the downstream side lands on the recording medium 4 which has been already wet with the ink, the ink ejected from the head 11B is less likely to adhere to the recording medium 4, and the color streak occurs in some cases. Performing the edge correcting process regarding the head 11B positioned on the downstream side is effective in such a case.

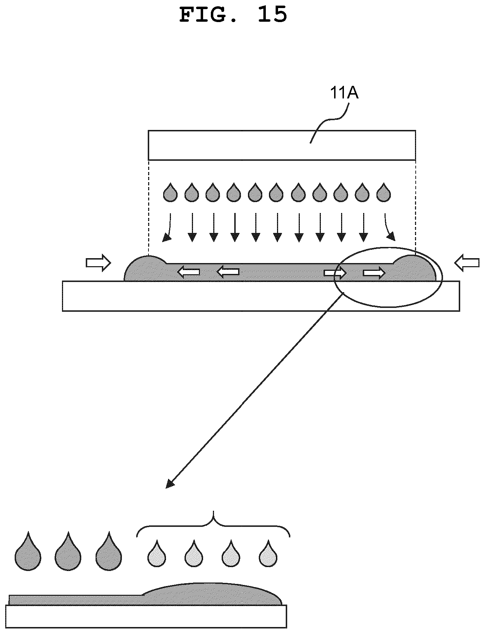

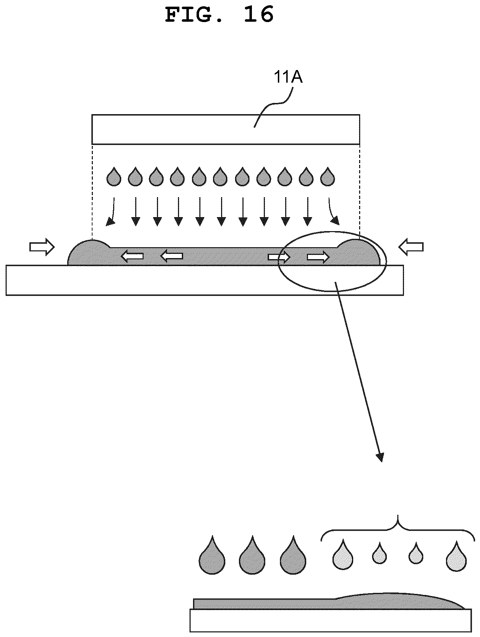

In the following, a case will be considered as an example in which, in the high duty mode, the head controller 7B performs the process of making the amount of the ink droplets ejected from the right-end nozzles 42Rs of the head 11A smaller than the amount of the ink droplets ejected from the other nozzles 42 of the head 11A. As depicted in FIG. 15, the amount of the ink droplets ejected from the right-end nozzles 42Rs can be made the same. Alternatively, as depicted in FIG. 16, the amount of the ink droplets ejected from end nozzles 42 located at opposite ends of the right-end nozzles 42Rs can be made greater than the amount of the ink droplets ejected from nozzles 42 located between the end nozzles of the right-end nozzles 42Rs. Regarding the color streak occurring in the high duty mode, the color of a central part of the color streak is particularly dense in some cases, and thus the above-described adjustment is particularly effective in the prevention of the occurrence of such a color streak.

### Effects of Embodiment

In the above-described embodiment, each of the head bars 10 of the printing apparatus 1 includes the head 11A and the head 11B disposed side by side along the left-right direction and apart from each other in the conveying direction. Further, the printing apparatus 1 includes the conveying rollers 5A and 5B which convey the recording medium 4 from the upstream side toward the downstream side along the conveying direction. The head 11A is located upstream of the head 11B in the conveying direction. The head 11A and the head 11B each have the nozzle area in which the plurality of nozzles 42 are aligned at the pitch P along the left-right direction, and the right end of the nozzle area of the head 11A and the left end of the nozzle area of the head 11B overlap with each other in the left-right direction. The usable nozzles of the head 11A includes the plurality of right-end nozzles 42Rs located in the right end of the usable nozzles. The usable nozzles of head 11A include the plurality of right-end nozzles 42Rs located at the right end in the left-right direction. The usable nozzles of head 11B include the plurality of left-end nozzles 42Ls located on the left-end side. The left-end side nozzle 42R located on the right-end side of the plurality of right-end nozzles 42Rs and the left-end nozzle 42L located on the left-end side of the plurality of left-end nozzles 42Ls are separated by a distance of less than the pitch P in the left-right direction.

The printing apparatus 1 is configured to execute a low-duty mode for forming a group of dot lines of the first density and a high-duty mode for forming a group of dot lines of the second density, which is greater than the first density, when forming a group of dot lines formed by a plurality of ink drops along the conveying direction. The printing method of this embodiment includes printing by repeatedly ejecting ink droplets from the usable nozzles of the head 11A and the usable nozzles of the head 11B while conveying the recording medium 4 in the conveying direction, and performing edge correcting process. The edge correcting process is to reduce the amount of ink droplets ejected from at least one of the plurality of right-end nozzles 42Rs or the plurality of left-end nozzles 42Ls when forming a group of dot lines in high-duty mode using the ink droplets ejected from the plurality of right-end nozzles 42Rs and the plurality of left-end nozzles 42Ls.

When forming a group of dot lines in high-duty mode, the edge correcting process is performed to reduce the amount of ink droplets ejected from at least one of the plurality of right-end nozzles 42Rs or the plurality of left-end nozzles 42Ls. This allows the occurrence of color streaks in high-duty mode to be controlled.

In the above embodiment, when forming a group of dot lines in the high-duty mode, the pattern of ejecting ink droplets of different sizes (e.g., the large droplet and the medium droplet) from the right-end nozzle 42R is different from the pattern of ejecting ink droplets of different sizes (e.g., the large droplet and the medium droplet) from the plurality of right-end nozzles 42Rs other than the right-end nozzle 42R. Alternatively, in the case of forming a group of dot lines in the high-duty mode, the pattern of ejecting ink droplets of different sizes (e.g., the large droplet and the medium droplet) from the left-end nozzle 42L is different from the pattern of ejecting ink droplets of different sizes (e.g., the large droplet and the medium droplet) from the plurality of left-end nozzles 42Ls other than the left-end nozzle 42R. For example, the left-end nozzle 42L and the right-end nozzle 42R can be processed using the stitch correction described above, while the other nozzles can be processed using the edge correcting process. The color fringing that can be controlled using stitch correction and the color fringing that can be controlled using the edge correcting process have different causes, so it is preferable to perform correction processing that is suitable for each.

When forming a group of dot lines in the high-duty mode, the edge correcting process can be performed so that the ink droplets ejected from the nozzles located between two nozzles at opposite ends of the right-end nozzles 42Rs are smaller than the ink droplets ejected from the two nozzles located at opposite ends. Alternatively, in the high-duty mode when forming a group of dot lines, the edge correcting process can be performed so that the ink droplets ejected from the nozzles located between two nozzles at opposite ends of the left-end nozzles 42Ls are smaller than the ink droplets ejected from the two nozzles located at the opposite ends. In the case of the high-duty mode, the color of the center part of the color streak may be particularly dark, and this is particularly effective for controlling the occurrence of such color streaks.

When forming a group of dot lines in the high-duty mode, the edge correcting process can be applied so that ink drops of a certain size and smaller ink drops (e.g., the large ink droplet and the medium ink droplets) land at positions separated in the conveying direction. In other words, when forming a group of dot lines, the edge correcting process can be performed so that only ink drops of the same size do not continuously land in the conveying direction. In this case, the total amount of ink drops can be controlled while effectively controlling the occurrence of color streaks.

In the case where a group of dot lines is formed in high-duty mode in a region (the first region) of the recording medium 4, consider a pattern of ejecting ink droplets of a predetermined size (e.g., large ink droplets) and ink droplets smaller than that (e.g., medium ink droplets) from the right-end nozzles 42Rs and left-end nozzles 42Ls. The pattern of ejecting ink droplets in this case is different from the pattern of ejecting ink droplets from the right-end nozzles 42Rs and the left-end nozzles 42Ls to form a group of dot lines in the second area located downstream of the first area of the recording medium 4. For example, it is possible to control the pattern of ejecting ink droplets so that it differs between the first line and the 1000th line. In the case where the same pattern of ejecting ink droplets is repeated, that area may stand out more than other areas, but by controlling the pattern of ejecting ink droplets so that it differs as described above, it is possible to control the deterioration of print quality due to the repetition of the same pattern of ejecting ink droplets.

In the above embodiment, the size of the ink droplets ejected from at least one of the right-end nozzles 42Rs or the left-end nozzles 42Ls can be changed so that the size of the ink droplets ejected from the right-end nozzles 42Rs does not become continuously zero (null) when forming a group of dot lines in the high-duty mode and the size of the ink droplets ejected from the left-end nozzles 42Ls does not become continuously zero (null). Alternatively, when forming a group of dot lines in the high-duty mode, the size of the ink droplets ejected from at least one of the right-end nozzles 42Rs or the left-end nozzles 42Ls can be changed so that the size of the ink drops ejected simultaneously from two nozzles 42 adjacent to each other in the left-right direction, out of the right-end nozzles 42Rs and the left-end nozzles 42Ls is not zero (null). If the non-ejection of ink droplets continues, the area where the ink has not landed will become noticeable. As mentioned above, by controlling so that non-ejection does not continue in two consecutive dots in the left-right direction or conveying direction, it is possible to control the area where the ink has not landed and prevent a noticeable drop in print quality.

When forming a group of dot lines in the high-duty mode, the edge correcting process is not performed on the right-end nozzles 42Rs of the head 11A located on the upstream side of the conveying direction, and the edge correcting process is only performed on the left-end nozzles 42Ls of the head 11B located on the downstream side of the conveying direction. When ink droplets are ejected from the head 11B, ink droplets have already been ejected from head 11A, which is located upstream. In other words, the recording medium 4 may already be wet with ink in the overlapping area. If more ink lands on the recording medium 4 that is already wet with ink, it may become difficult for the ink to adhere to the recording medium, and color streaks may occur. In such cases, it is effective to perform edge correcting process for the head 11B located downstream.

In the above embodiment, when forming a group of dot lines in the low-duty mode, the edge correcting process can be disabled. In this case, since the edge correcting process is not required, it becomes easier to control the right-end nozzles 42Rs and left-end nozzles 42Ls.

In the above embodiment, even for the nozzles 42 located at the end of the head 11 in the left-right direction, if the nozzle 42 does not overlap with other nozzles 42, the edge correcting process does not need to be performed. In this case, since the edge correcting process is not required, it becomes easier to control the nozzles 42 that do not overlap with other nozzles 42.

The embodiment disclosed herein is an example in all senses, and should be interpreted as non-restrictive or non-limiting in any way. All of the respective configurations described in the above-described embodiment are not necessarily indispensable, and the respective configurations can be changed or omitted as necessary.

In the above-described embodiment, the number of the head bar 10 is three. However, the present invention is not limited to such an aspect, and the number and/or the position of the head bar 10 may be changed as appropriate. Similarly, the number and/or the position of the head 11 included in one head group 20 may be changed as appropriate. Further, the number and/or the position of the nozzle 42 included in each of the heads 11 may also be changed as appropriate.

In the above-described embodiment, the recording medium wound in the roll shape (for example, roll sheet) is used as the recording medium 4. The present invention, however, is not limited to such an aspect; a recording medium 4 having an appropriate shape and made of an appropriate material may be used, as necessary. The printing apparatus 1 of the above-described embodiment includes the three head bars 10 and is configured to eject the inks of five colors which are the white ink, the cyan ink, the magenta ink, the yellow ink, and the black ink. The present invention is not limited to such an aspect; the printing apparatus 1 may be configured to discharge an ink of an appropriate color. Further, in the present embodiment, the UV-curable ink is used. The present invention, however, is not limited to such an aspect; an ink different from the UV-curable ink (for example, a water-based ink, a pigment ink, etc.) may also be used.

Furthermore, the present invention is not necessarily limited to the head bar including the line head; the present invention is widely applicable to a head bar including a plurality of heads. Moreover, the present invention is not limited to the printing apparatus of the ink-jet system which is configured to eject an ink. Further, the present invention is also applicable to a printing apparatus which is usable in a variety of kinds of usage or application other than printing an image, etc. For example, the present invention is applicable also to a printing apparatus configured to form a conductive pattern on a surface of a substrate by ejecting a conductive liquid onto the surface of the substrate. The scope of the present invention is intended to encompass all the changes within the scope of the claims and a scope equivalent to the scope of the claims.

### REFERENCE SIGNS LIST:

1: printing apparatus
10: head bar
11: head
42: nozzle
42L: left-end nozzle
42Ls: left end nozzles
42R: right-end nozzle
42Rs: right-end nozzles

## Claims

1. A printing method using a printing apparatus, the printing apparatus including:
a head bar having a first head and a second head disposed side by side in a first direction and at positions, respectively, which are shifted from each other in a second direction orthogonal to the first direction; and
a conveyor configured to convey a recording medium from an upstream side toward a downstream side along the second direction, wherein
the first head is located upstream of the second head in the second direction,
each of the first head and the second head has a nozzle area in which nozzles are aligned at a pitch P along the first direction, and a first end part of the nozzle area of the first head in the first direction and a second end part of the nozzle area of the second head in the first direction overlap with each other in the first direction,
usable nozzles of the first head includes first-end nozzles located in the first end part in the first direction, and usable nozzles of the second head includes second-end nozzles located in the second end part in the first direction, the distance in the first direction between a first nozzle, which is located at a first end of the first-end nozzles in the first direction, and a second nozzle, which is located at a second end of second-end nozzles in the first direction is less than the pitch P, and
in a case of forming a group of dot lines formed along the second direction by liquid droplets ejected from the first-end nozzles, the printing apparatus is configured to execute a low duty mode in which a group of dot lines of a first density is formed and a high duty mode in which a group of dot lines of a second density that is higher than the first density is formed, and the printing method comprising:
performing printing by repeatedly ejecting liquid droplets from the usable nozzles of the first head and the usable nozzles of the second head while conveying the recording medium along the second direction; and
in a case of forming the group of dot lines in the high duty mode using the liquid droplets ejected from the first-end nozzles, reducing an amount of liquid droplets ejected from at least one of the first-end nozzles or the second-end nozzles.

2. The printing method according to claim 1, wherein
in the case of forming the group of dot lines in the high duty mode,
a pattern of ejecting first liquid droplets and liquid droplets smaller than the first liquid droplets from the first nozzle is different from a pattern of ejecting the first liquid droplets and the liquid droplets smaller than the first liquid droplets from a nozzle among the first-end nozzles, the nozzle being other than the first nozzle, or
a pattern of ejecting the first liquid droplets and liquid droplets smaller than the first liquid droplets from the second nozzle is different from a pattern of ejecting the first liquid droplets and the liquid droplets smaller than the first liquid droplets from a nozzle among the second-end nozzles, the nozzle being other than the second nozzle.

3. The printing method according to claim 1 or 2, wherein
in the case of forming the group of dot lines in the high duty mode,
the amount of liquid droplets ejected from the at least one of the first-end nozzles or the second-end nozzles is reduced so that liquid droplets ejected from a nozzle located between two nozzles located at opposite ends of the first-end nozzles in the first direction are smaller than liquid droplets ejected from the two nozzles, or so that liquid droplets ejected from a nozzle located between two nozzles located at opposite ends of second-end nozzles in the first direction are smaller than liquid droplets ejected from the two nozzles.

4. The printing method according to any of claims 1 to 3, wherein
in the case of forming the group of dot lines in the high duty mode,
first liquid droplets and liquid droplets smaller than the first liquid droplets are ejected from a nozzle in the first-end nozzles or from a nozzle in the second-end nozzles so that the first liquid droplets and the liquid droplets smaller than the first liquid droplets land in separate positions in the second direction.

5. The printing method according to any of claims 1 to 4, wherein
a pattern of ejecting liquid droplets, in which first liquid droplets and liquid droplets smaller than the first liquid droplets are ejected from at least one of the first-end nozzles or the second-end nozzles in a case of forming the group of dot lines in a first area of the recording medium in the high duty mode is different from a pattern of ejecting liquid droplets, in which the first liquid droplets and the liquid droplets smaller than the first liquid droplets are ejected from at least one of the first-end nozzles or the second-end nozzles in a case of forming the group of dot lines in a second area of the recording medium in the high duty mode, the second area being located downstream of the first area.

6. The printing method according to any of claims 1 to 5, wherein
in the case of forming the group of dot lines in the high duty mode,
the amount of liquid droplets ejected from the at least one of the first-end nozzles or the second-end nozzles is reduced so that a size of the liquid droplets ejected from a nozzle among the first-end nozzles does not continuously become zero, and a size of the liquid droplets ejected from a nozzle among the second-end nozzles does not continuously become zero.

7. The printing method according to any of claims 1 to 6, wherein
in the case of forming the group of dot lines in the high duty mode,
the amount of liquid droplets ejected from the at least one of the first-end nozzles or the second-end nozzles is reduced so that a size of the liquid droplets ejected from two adjacent nozzles among the first-end nozzles does not continuously become zero, and a size of the liquid droplets ejected from two adjacent nozzles among the second-end nozzles does not continuously become zero.

8. The printing method according to any of claims 1 to 7, wherein
in the case of forming the group of dot lines in the high duty mode,
an amount of liquid droplets ejected from the first-end nozzles is not reduced, and an amount of liquid droplets ejected from the second-end nozzles is reduced.

9. The printing method according to any of claims 1 to 8, wherein
in the case of forming the group of dot lines in the low duty mode,
an amount of liquid droplets ejected from at least one of the first nozzle or the second nozzle is reduced, and
an amount of liquid droplets ejected from the first-end nozzles except for the first nozzle is not reduced, and an amount of liquid droplets ejected from the second-end nozzles except for the second nozzle is not reduced.

10. The printing method according to any of claims 1 to 9, wherein
the head bar includes heads including the first head and the second head,
the first head is located at an end of the head bar in the first direction among the heads, the usable nozzles of the first head includes third-end nozzles located in a third end part that is opposite to the first end part of the nozzle area of the first head in the first direction, and the third-end nozzles does not overlap with the heads except for the first head in the first direction, and
in the case of forming the group of dot lines in the high duty mode,
an amount of liquid droplets ejected from the third-end nozzles is not reduced.

11. A printing apparatus comprising:
a head bar having a first head and a second head disposed side by side in a first direction and at positions, respectively, which are shifted from each other in a second direction orthogonal to the first direction;
a conveyor configured to convey a recording medium from an upstream side toward a downstream side along the second direction;
a controller configured to control the head bar and the conveyor, wherein
the first head is located upstream of the second head in the second direction,
each of the first head and the second head has a nozzle area in which nozzles are aligned at a pitch P along the first direction, and a first end part of the nozzle area of the first head in the first direction and a second end part of the nozzle area of the second head in the first direction overlap with each other in the first direction,
usable nozzles of the first head includes first-end nozzles located in the first end part in the first direction, and usable nozzles of the second head includes second-end nozzles located in the second end part in the first direction, the distance in the first direction between a first nozzle, which is located at a first end of the first-end nozzles in the first direction, and a second nozzle, which is located at a second end of the second-end nozzles in the first direction is less than the pitch P,
the controller is configured to control the head bar and the conveyor to execute:
in a case of forming a group of dot lines formed along the second direction by liquid droplets ejected from the first-end nozzles, performing a low duty mode in which a group of dot lines of a first density is formed and a high duty mode in which a group of dot lines of a second density that is higher than the first density is formed;
performing printing by repeatedly ejecting liquid droplets from the usable nozzles of the first head and the usable nozzles of the second head while conveying the recording medium along the second direction; and
in a case of forming the group of dot lines in the high duty mode using the liquid droplets ejected from the first-end nozzles, reducing an amount of liquid droplets ejected from at least one of the first-end nozzles or the second-end nozzles.
